# EUROPEAN PATENT APPLICATION

(11) **EP 4 552 970 A1**
(43) Date of publication of application: **14.05.2025**
(21) Application number: 23863138.6
(22) Date of filing: 04.09.2023
(51) Int. Cl.: B63J 2/08

(54) **FLOATING BODY, FLOATING BODY AMMONIA TREATMENT METHOD**

(30) Priority: 07.09.2022 JP 2022142115
(71) Applicant: Mitsubishi Shipbuilding Co., Ltd., Tokyo 108-8015 (JP)
(72) Inventor: YAMADA, Daisuke, Yokohama-shi, Kanagawa 220-8401 (JP); UNSEKI, Takashi, Yokohama-shi, Kanagawa 220-8401 (JP); SATO, Koichi, Yokohama-shi, Kanagawa 220-8401 (JP); YOSHIDA, Atsushi, Yokohama-shi, Kanagawa 220-8401 (JP); TAKAMATSU, Tomoteru, Yokohama-shi, Kanagawa 220-8401 (JP)
(74) Representative: Studio Torta S.p.A.
(86) International application number: PCT/JP2023/032225
(87) International publication number: WO 2024/053600

(57) **Abstract**

This floating body includes: a floating main body; an ammonia facility provided in the floating main body; a ventilation opening exposed to an outer surface of the floating body and communicated with a compartment inside the floating body; an air washer provided on the ventilation opening and capable of supplying water to the ventilation opening while enabling circulation of air in/out of the ventilation opening; a water supply unit supplying water to the air washer; a sensor capable of detecting an outflow of ammonia from the ammonia facility into the atmosphere; a control device for operating the air washer when the sensor detects an outflow of ammonia; and a water treatment unit for recovering water used by the air washer.

## Description

### Technical Field

The present disclosure relates to a floating structure and an ammonia treatment method for a floating structure.

This application claims priority to Japanese Patent Application No. 2022-142115, filed in Japan on September 7, 2022, the content of which is incorporated herein by reference.

### Background Art

In a ship that carries a flammable gas as fuel for ship propulsion or as cargo, a vent post for releasing the flammable gas into an atmosphere outside the ship may be provided.

On the other hand, in some cases, ammonia is loaded as fuel for ship propulsion or as cargo. Even in such a case where ammonia is loaded, it is considered to release ammonia into the atmosphere through the vent post, for example, in a case where a pressure of the ammonia excessively increases.

However, since ammonia is highly toxic, it is necessary to take measures to reduce entry of the ammonia, which is released into the atmosphere, into an internal space such as a hull or a superstructure.

For example, PTL 1 discloses a leaked-ammonia exclusion device that excludes ammonia leaked from an ammonia refrigerating apparatus by ventilation.

### Citation List

### Patent Literature

[PTL 1] Japanese Patent No. 3066828

### Summary of Invention

### Technical Problem

Meanwhile, in the leaked-ammonia exclusion device disclosed in PTL 1, the leaked ammonia is excluded by ventilation, but even in a case where such a configuration is applied to a ship, depending on an amount of ammonia released from the vent post into the atmosphere and the like, it is not always possible to sufficiently reduce the entry of the ammonia into the internal space such as a hull and a superstructure.

The present disclosure has been made to solve the above problems, and an object of the present disclosure is to provide a floating structure and an ammonia treatment method for a floating structure with which it is possible to reduce entry of ammonia into an internal space.

### Solution to Problem

In order to achieve the above-described object, a floating structure according to the present disclosure includes a floating main structure, an ammonia facility, a ventilation opening, an air washer, a water supply unit, a sensor, a control device, and a water treatment unit. The ammonia facility is provided in the floating main structure. The ventilation opening is exposed to an outer surface of the floating main structure. The ventilation opening communicates with a compartment inside the floating main structure. The air washer is provided in the ventilation opening. The air washer is capable of supplying water to the ventilation opening while enabling circulation of air in/out of the ventilation opening. The water supply unit supplies the water to the air washer. The sensor is capable of detecting an outflow of ammonia from the ammonia facility into an atmosphere. The control device operates the air washer in a case where the sensor detects the outflow of ammonia. The water treatment unit recovers used water used by the air washer.

An ammonia treatment method for a floating structure according to the present disclosure is an ammonia treatment method for the above-described floating structure. The ammonia treatment method for a floating structure includes operating the air washer to supply water to the ventilation opening while enabling circulation of air in/out of the ventilation opening in a case where an outflow of ammonia from the ammonia facility provided in the floating main structure is detected.

### Advantageous Effects of Invention

With a floating structure and an ammonia treatment method for a floating structure according to the present disclosure, it is possible to reduce entry of ammonia into an internal space.

### Brief Description of Drawings

Fig. 1 is a side view of a floating structure and an ammonia treatment method for a floating structure according to an embodiment of the present disclosure.
Fig. 2 is a schematic configuration diagram showing an air washer, a sensor, and a water treatment unit provided in the floating structure according to the embodiment of the present disclosure.
Fig. 3 is a diagram showing a hardware configuration of a control device according to the embodiment of the present disclosure.
Fig. 4 is a functional block diagram of the control device according to the embodiment of the present disclosure.
Fig. 5 is a flowchart showing a procedure of the ammonia treatment method for a floating structure according to the embodiment of the present disclosure.
Fig. 6 is a schematic configuration diagram showing an air washer, a sensor, and a water treatment unit provided in a floating structure according to a first modification example of the embodiment of the present disclosure.
Fig. 7 is a schematic configuration diagram showing an air washer, a sensor, and a water treatment unit provided in a floating structure according to a second modification example of the embodiment of the present disclosure.

### Description of Embodiments

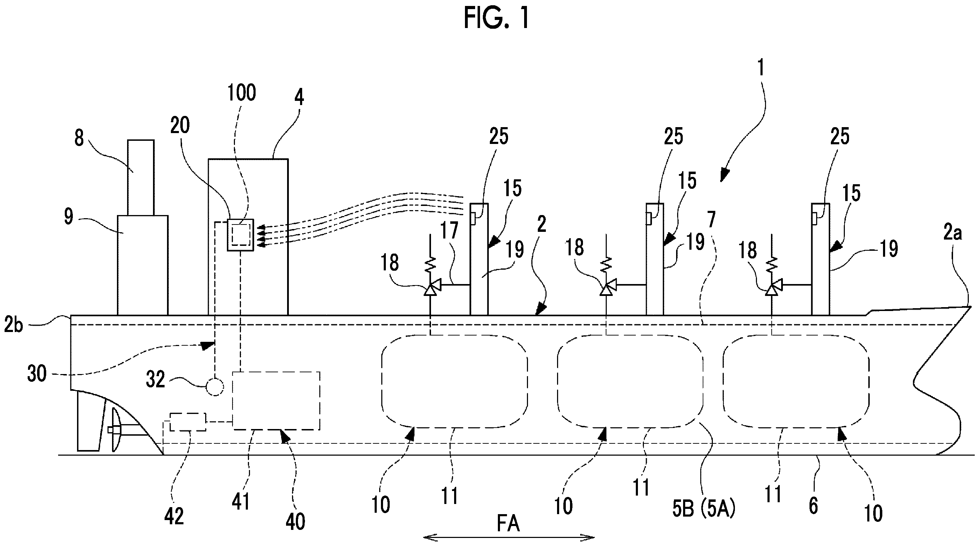

Hereinafter, a floating structure and an ammonia treatment method for a floating structure according to an embodiment of the present disclosure will be described with reference to Figs. 1 to 7.

### (Configuration of Floating Structure)

As shown in Fig. 1, the floating structure 1 according to the embodiment includes a floating main structure 2, a superstructure 4, and an ammonia facility 10. The floating structure 1 according to the present embodiment will be described with a ship that can navigate with a main engine or the like as an example. A ship type of the floating structure 1 is not limited to a specific ship type. Examples of the ship type of the floating structure 1 include a liquefied gas carrier, a ferry, a RORO ship, a vehicle carrier, a passenger ship, and the like. Although a case where the floating structure 1 is a ship will be described as an example in the present embodiment, the floating structure 1 is not limited to a ship, and may be a floating storage unit (FSU), a floating storage and regasification unit (FSRU), or the like that cannot navigate with a main engine or the like.

The floating main structure 2 is formed to float on seawater. The floating main structure 2 has a pair of ship sides 5A and 5B and a bottom 6 that form an outer shell thereof. The ship sides 5A and 5B include a pair of ship side outer plates respectively forming right and left ship sides. The bottom 6 includes a bottom outer plate that connects the ship sides 5A and 5B. The outer shell of the floating main structure 2 is formed in a U shape in a cross section orthogonal to a bow-stern direction FA by the pair of ship sides 5A and 5B and the bottom 6.

The floating main structure 2 further includes an upper deck 7 that is a through deck which is disposed in an uppermost layer. The superstructure 4 is formed on the upper deck 7. An accommodation space and the like are provided in the superstructure 4. In the floating structure 1 according to the present embodiment, for example, a cargo space (not shown) for loading cargo is provided on a bow 2a side with respect to the superstructure 4 in the bow-stern direction FA.

In addition, the floating structure 1 includes, for example, an exhaust pipe 8 and a funnel 9 on a stern 2b side with respect to the superstructure 4 in the bow-stern direction FA. The exhaust pipe 8 discharges exhaust gas from an engine provided in an engine room inside the floating main structure 2. The exhaust pipe 8 may extend upward from the upper deck 7. The funnel 9 is provided on the upper deck 7. The exhaust pipe 8 extends upward through the funnel 9.

The ammonia facility 10 is provided in the floating main structure 2. The ammonia facility 10 is a facility that handles ammonia. In the present embodiment, a case where the ammonia facility 10 is an ammonia tank 11 that stores ammonia will be described as an example. The ammonia facility 10 includes the ammonia tank 11 and a release unit 15.

The ammonia tank 11 is a tank that stores liquid ammonia (in other words, liquefied ammonia). The ammonia tank 11 is provided in a cargo space in the floating main structure 2. A plurality of the ammonia tanks 11 according to the present embodiment are provided at intervals in the bow-stern direction FA. In the present embodiment, three ammonia tanks 11 are provided at intervals in the bow-stern direction FA. The number of the ammonia tanks 11 that is installed, a disposition, a shape, and the like of the ammonia tank 11 are not limited, and may be appropriately changed.

The release unit 15 includes a safety valve 18 and a vent post 19.

The safety valve 18 is provided in each of the plurality of ammonia tanks 11. The safety valve 18 is provided in the middle of a connection pipe 17 that connects the ammonia tank 11 and the vent post 19 to each other. The safety valve 18 is in a closed state in a normal case, and closes a flow channel in the connection pipe 17. The safety valve 18 is in an opened state in a case where a pressure of the ammonia inside the ammonia facility 10 is equal to or higher than a specified value set in advance, and opens the flow channel in the connection pipe 17. In a case where the safety valve 18 is in the opened state, the ammonia inside the ammonia facility 10 is released to an outside of the ammonia facility 10 through the connection pipe 17.

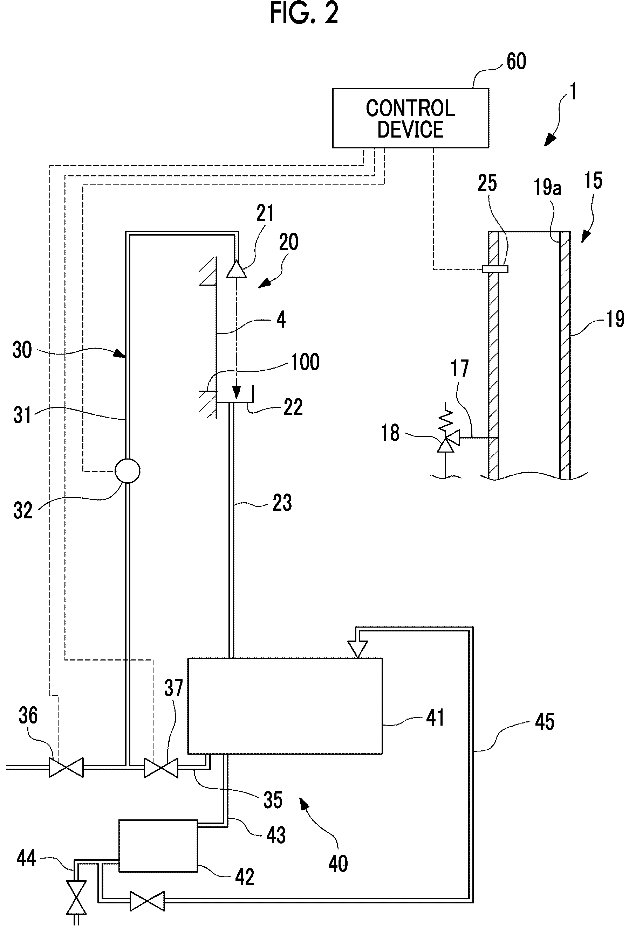

The vent post 19 is provided on the upper deck 7. The vent post 19 is formed in a tubular shape extending in an up-down direction. The vent post 19 guides the ammonia released from the safety valve 18 to the atmosphere to cause the ammonia to flow out into the atmosphere. The ammonia released from the safety valve 18 flows out to the atmosphere from an opening 19a (refer to Fig. 2) formed at an upper end of the vent post 19.

Fig. 2 is a schematic configuration diagram showing an air washer, a sensor, and a water treatment unit provided in the floating structure according to the embodiment of the present disclosure.

As shown in Fig. 2, the floating structure 1 further includes an air washer 20, a water supply unit 30, a water treatment unit 40, a sensor 25, and a control device 60.

The air washer 20 is provided in a ventilation opening 100. The ventilation opening 100 is exposed to an outer surface of the floating structure 1. The ventilation opening 100 communicates with a compartment inside the floating structure 1. In the present embodiment, the ventilation opening 100 is provided in, for example, the superstructure 4. The ventilation opening 100 is provided to be exposed to an outer surface of the superstructure 4. The ventilation opening 100 is formed to communicate between an outside of the superstructure 4 and the compartment (accommodation space) in the superstructure 4. Specifically, the ventilation opening 100 is an air intake port for ventilation and an air intake port of an air conditioning system. The ventilation opening 100 may be, for example, an openable and closable window, an openable and closable door, or the like. In addition, the ventilation opening 100 may be provided in other portions exposed to the outer surface of the floating structure 1, such as the funnel 9 communicating with the engine room inside the floating main structure 2.

The air washer 20 supplies water supplied from the water supply unit 30 to the ventilation opening 100. The air washer 20 is capable of supplying water to the ventilation opening 100 while enabling circulation of air in/out of the ventilation opening 100. The air washer 20 includes a water supply nozzle 21 and a water recovery tray 22.

For example, the water supply nozzle 21 is disposed above the ventilation opening 100. The water supply nozzle 21 supplies the water supplied from the water supply unit 30 to air flowing from the outside of the superstructure 4 into an internal space inside the compartment through the ventilation opening 100 by spraying, jetting, dropping, or the like. In a case where air containing ammonia reaches the ventilation opening 100, the water supplied from the water supply nozzle 21 comes into contact with the ammonia contained in the air to recover (in other words, absorb) the ammonia. The water containing ammonia falls downward because of its own weight.

In addition, the air washer 20 may be of any type, not limited to spraying, jetting, dripping, or the like from the water supply nozzle 21, as long as it can remove the ammonia contained in the air flowing from the outside of the superstructure 4 into the internal space inside the compartment through the ventilation opening 100 using the water supplied from the water supply unit 30.

The water recovery tray 22 recovers the water supplied from the water supply nozzle 21 by spraying, jetting, dropping, or the like. The water recovery tray 22 is disposed below the water supply nozzle 21. The water recovery tray 22 is connected to the water treatment unit 40 via a water recovery pipe 23. The water recovered by the water recovery tray 22 is discharged to the water treatment unit 40 via the water recovery pipe 23.

The water supply unit 30 supplies water to the air washer 20. The water supply unit 30 includes a supply line 31, a pump 32, a first valve 36, and a second valve 37.

The supply line 31 supplies water to the water supply nozzle 21 of the air washer 20 from an outside. One end of the supply line 31 is connected to the water supply nozzle 21. For example, water (for example, fresh water) stored in a water tank (not shown) provided in the floating main structure 2 or water (for example, seawater) taken in from the outside of the floating structure is supplied to the supply line 31. In addition, the supply line 31 may be configured to take in water from a water supply system that supplies water (seawater) to an air conditioning system or the like provided in the floating structure 1. The pump 32 pumps water to the water supply nozzle 21 from the outside through the supply line 31.

The floating structure 1 according to the present embodiment further includes a circulation line 35. The circulation line 35 is capable of supplying water recovered into a tank 41 of the water treatment unit 40 to be described later to the water supply unit 30. One end of the circulation line 35 is joined with and connected to the supply line 31 on an upstream side of the pump 32. The other end of the circulation line 35 is connected to the tank 41.

The first valve 36 is provided in the supply line 31. The first valve 36 is provided in the supply line 31 on an upstream side of a position at which one end of the circulation line 35 is joined with and connected to the supply line 31. The first valve 36 intermittently takes in water from an external water tank and a sea into the supply line 31. The second valve 37 is provided in the circulation line 35. The second valve 37 intermittently perform circulation of the water from the tank 41.

The water supply unit 30 is capable of switching a water supply source for the water supply nozzle 21 by opening and closing the first valve 36 and the second valve 37. The water supply unit 30 opens the first valve 36 and closes the second valve 37 to supply fresh water in a fresh water tank (not shown) provided in the floating main structure 2 or seawater collected from a periphery where the floating main structure 2 floats to the air washer 20. The water supply unit 30 closes the first valve 36 and opens the second valve 37 to supply the water circulated from the tank 41 of the water treatment unit 40 to the air washer 20.

The water treatment unit 40 recovers used water used by the air washer 20. The water treatment unit 40 recovers the water recovered by the water recovery tray 22 and discharged through the water recovery pipe 23 as the used water used by the air washer 20. The water treatment unit 40 mainly includes the tank 41 and an ammonia treatment unit 42.

The tank 41 is provided in the floating main structure 2. The tank 41 recovers the used water used by the air washer 20. The tank 41 stores the recovered water. A disposition of the tank 41 is not limited to the above disposition as long as the used water can be recovered with the disposition.

The ammonia treatment unit 42 treats ammonia contained in the used water recovered into the tank 41. The ammonia treatment unit 42 is a device that detoxifies ammonia contained in aqueous ammonia. The specific configuration of the ammonia treatment unit 42 is not limited as long as the ammonia contained in the used water can be treated.

The ammonia treatment unit 42 is connected to the tank 41 via a connection pipe 43. The ammonia treatment unit 42 according to the present embodiment decomposes the ammonia contained in the used water introduced from the tank 41 through the connection pipe 43, for example, by a denitrification reaction. The ammonia treatment unit 42 introduces seawater from the sea around which the floating main structure 2 floats. The ammonia treatment unit 42 performs electrolysis on the introduced seawater to produce a seawater electrolytic solution containing sodium hypochlorite. Specifically, an anode and a cathode (not shown) are placed in the introduced seawater, and a voltage is applied between the anode and the cathode, thereby electrolyzing the seawater. By the electrolysis, sodium hypochlorite is produced from seawater.

The ammonia treatment unit 42 mixes the seawater electrolytic solution produced by the electrolysis with the used water introduced from the tank to cause the mixture to react. More specifically, as shown in Expression (1), the ammonia treatment unit 42 causes the ammonia (2NH₃) contained in the used water and the sodium hypochlorite (3NaClO) of the seawater electrolytic solution to react in an acidic environment to decompose the ammonia and sodium hypochlorite into nitrogen (N₂), sodium chloride (3NaCl), and water (3H₂O).

2NH₃ + 3NaClO ⇒ N₂ + 3NaCl + 3H₂O ... (1)

The nitrogen produced by the denitrification reaction in the ammonia treatment unit 42 is released into the atmosphere, for example, through the funnel 9 extending from the upper deck 7. On the other hand, the sodium chloride and the water produced by the denitrification reaction are discharged to a discharge unit 44 connected to the ammonia treatment unit 42 as a treated liquid. The discharge unit 44 discharges the treated liquid into the seawater around which the floating main structure 2 floats.

In addition, the floating structure 1 according to the present embodiment is capable of supplying water in which ammonia has been treated (detoxified) by the ammonia treatment unit 42 to the water supply unit 30. Therefore, the floating structure 1 includes a treated water circulation line 45. The treated water circulation line 45 circulates the water in which the ammonia has been treated by the ammonia treatment unit 42 to the tank 41. As a result, a concentration of ammonia contained in the water in the tank 41 is reduced. In the circulation line 35, the water in the tank 41, in which the concentration of ammonia has been reduced, is supplied to the water supply unit 30.

In the treated water circulation line 45, the water in which the ammonia has been treated (detoxified) by the ammonia treatment unit 42 may be supplied to the water supply unit 30 through another treated water tank (not shown) or the like without passing via the tank 41.

The sensor 25 is capable of detecting an outflow of the ammonia from the ammonia facility 10 into the atmosphere. The sensor 25 detects, for example, that the ammonia is released from the release unit 15. The sensor 25 can be disposed in, for example, the vent post 19. The sensor 25 detects the ammonia released from the safety valve 18 into the vent post 19 in a case where the pressure of the ammonia inside the ammonia facility 10 is equal to or higher than the specified value. In a case where the concentration of the ammonia contained in the air (atmosphere) inside the vent post 19 is equal to or higher than a threshold value set in advance, the sensor 25 outputs a signal indicating that the ammonia has been detected to the control device 60.

The control device 60 operates the air washer 20 in a case where the sensor 25 detects the outflow of the ammonia.

### (Hardware Configuration Diagram)

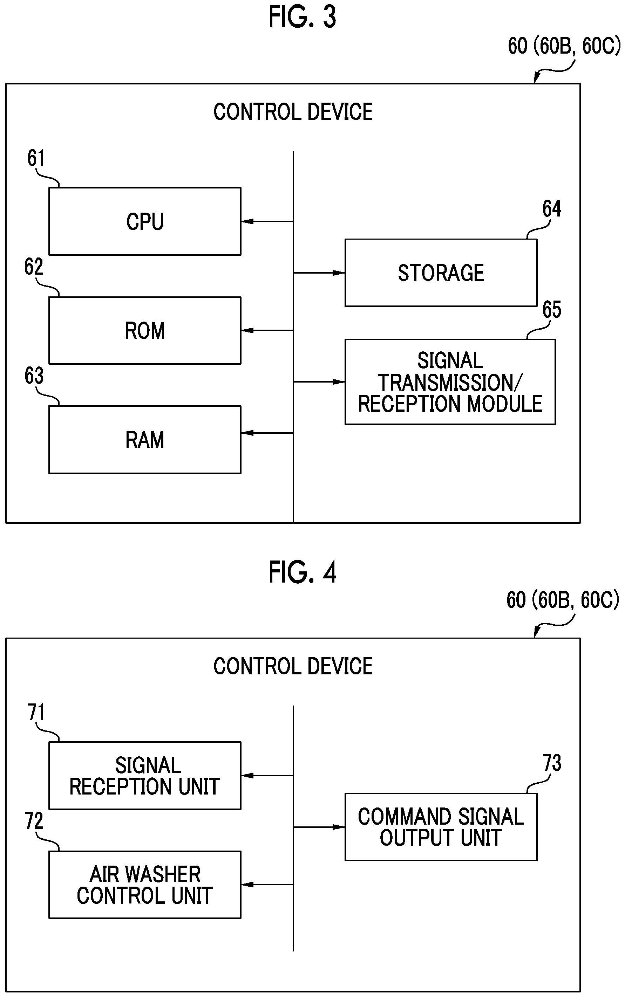

Fig. 3 is a diagram showing a hardware configuration of a control device according to the embodiment of the present disclosure.

As shown in Fig. 3, the control device 60 is a computer including a central processing unit (CPU) 61, a read-only memory (ROM) 62, a random-access memory (RAM) 63, a storage 64 such as a hard disk drive (HDD), and a signal transmission/reception module 65.

### (Functional Block Diagram)

Fig. 4 is a functional block diagram of the control device according to the embodiment of the present disclosure.

As shown in Fig. 4, the CPU 61 of the control device 60 executes a program stored in the ROM 62 or the storage 64 to implement respective functional configurations of a signal reception unit 71, an air washer control unit 72, and a command signal output unit 73.

The signal reception unit 71 receives a detection signal from the sensor 25 via the signal transmission/reception module 65 that is hardware.

The air washer control unit 72 controls the operation of the air washer 20 based on the detection signal from the sensor 25. The air washer control unit 72 operates the air washer 20 in a case where the sensor 25 detects the outflow of the ammonia. The air washer control unit 72 stops the operation of the air washer 20 in a case where the outflow of ammonia is not detected by the sensor 25 (in a case of non-detection). The air washer control unit 72 controls the operation of the air washer 20 by controlling an operation of the pump 32, for example.

In a case where the sensor 25 detects the outflow of the ammonia, the command signal output unit 73 outputs a command signal for operating the air washer 20, which is output from the air washer control unit 72, to the air washer 20. The command signal output unit 73 outputs a command signal for stopping the operation of the air washer 20 to the air washer 20 in a case where the outflow of the ammonia is not detected by the sensor 25 (in a case of non-detection).

### (Procedure of Ammonia Treatment Method for Floating Structure 1)

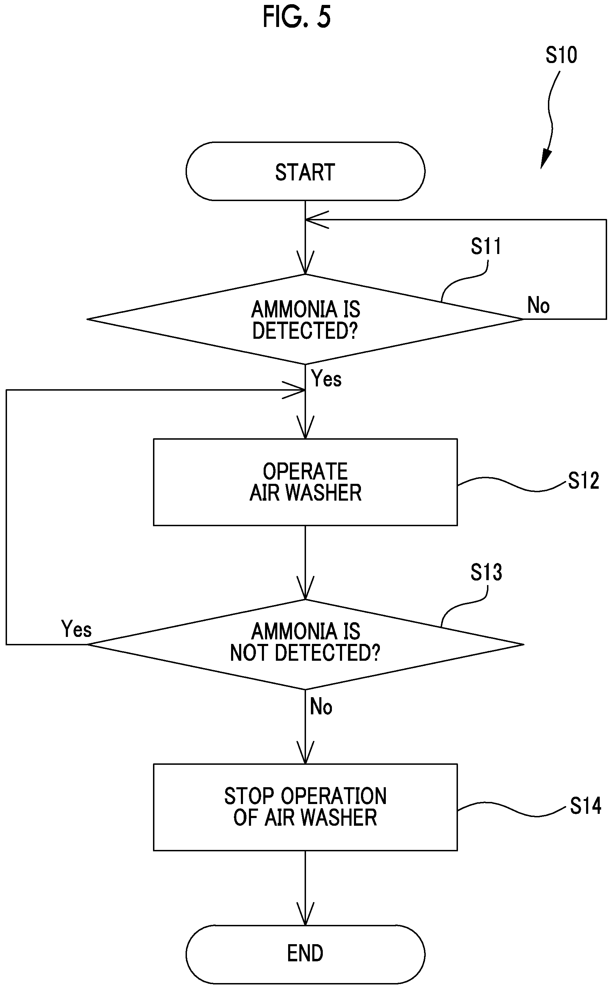

Fig. 5 is a flowchart showing a procedure of the ammonia treatment method for a floating structure according to the embodiment of the present disclosure. As shown in Fig. 5, an ammonia treatment method S10 for the floating structure 1 according to the embodiment of the present disclosure includes step S11 of checking the detection of the ammonia, step S12 of operating the air washer, step S13 of checking the non-detection of the ammonia, and step S14 of stopping the air washer.

In step S11 of checking the detection of the ammonia, the air washer control unit 72 of the control device 60 checks whether or not the outflow of the ammonia from the ammonia facility 10 into the atmosphere is detected by the sensor 25. In a case where the pressure of the ammonia inside the ammonia facility 10 is equal to or higher than the specified value and the safety valve 18 is opened, the sensor 25 detects the outflow of the ammonia from the ammonia facility 10 into the atmosphere through the vent post 19. In a case where the concentration of the ammonia contained in the air (atmosphere) inside the vent post 19 is equal to or higher than the threshold value set in advance, the sensor 25 outputs the signal indicating that the ammonia has been detected to the control device 60. The output signal is received by the signal reception unit 71.

In step S11, in a case where the signal reception unit 71 does not receive the signal indicating that the ammonia has been detected from the sensor 25 (No in step S11), the procedure returns to step S11, and step S11 is repeated at time intervals set in advance.

In step S11, in a case where the signal reception unit 71 receives the signal indicating that the ammonia has been detected from the sensor 25, the air washer control unit 72 determines that the ammonia has been detected (Yes in step S11), and the procedure proceeds to step S12.

In step S12 of operating the air washer, the air washer control unit 72 operates the air washer 20. The air washer control unit 72 operates the pump 32 to supply water from the water supply unit 30 to the air washer 20. In a case where the pump 32 is operated, water is supplied from the water supply nozzle 21 to the ventilation opening 100 through the water supply unit 30. Accordingly, in a case where the ammonia that has flowed out from the vent post 19 reaches the ventilation opening 100 together with the air (atmosphere), the ammonia contained in the air can be absorbed by water.

In step S13 of checking the non-detection of the ammonia, the air washer control unit 72 of the control device 60 checks whether or not the outflow of the ammonia from the ammonia facility 10 into the atmosphere is no more detected by the sensor 25 (non-detection). In a case where the pressure of the ammonia inside the ammonia facility 10 is lower than the specified value after the safety valve 18 is opened, the safety valve 18 is closed. In a case where the concentration of the ammonia contained in the air (atmosphere) inside the vent post 19, which is measured by the sensor 25, is lower than the threshold value set in advance after the safety valve 18 is closed, the signal indicating that the ammonia is detected is no more output from the sensor 25.

In step S13, in a case where the signal reception unit 71 receives the signal indicating that ammonia has been detected from the sensor 25 (Yes in step S13), the procedure returns to step S12 and the operation of the air washer 20 is continued.

In step S13, in a case where the signal reception unit 71 is in a state in which the signal indicating that the ammonia has been detected is not received from the sensor 25 (non-detection) (No in step S13), the procedure proceeds to step S14.

In step S14 of stopping the air washer, the air washer control unit 72 stops the operation of the air washer 20. The air washer control unit 72 stops the operation of the pump 32 that supplies water to the air washer 20. As the operation of the pump 32 is stopped, the supply of water to the water supply nozzle 21 is stopped.

### (Effects of Action)

In the floating structure 1 and the ammonia treatment method S10 for the floating structure 1 according to the above-described embodiment, the air washer 20 that is capable of supplying water to the ventilation opening 100 while enabling the circulation of air in/out of the ventilation opening 100 is provided in the ventilation opening 100. In a case where the sensor 25 detects the outflow of the ammonia from the ammonia facility 10 into the atmosphere, the control device 60 operates the air washer 20. In a case where the air washer 20 is operated, the water supplied by the water supply unit 30 is supplied to the ventilation opening 100. As a result, the ammonia contained in the air circulating through the ventilation opening 100 is absorbed by the water. The used water that has been used by the air washer 20 and has absorbed ammonia is recovered by the water treatment unit 40. Therefore, it is possible to reduce entry of ammonia into the internal space through the ventilation opening 100.

Further, in the above-described embodiment, in a case where the pressure of the ammonia inside the ammonia facility 10 is equal to or higher than the specified value, the ammonia inside the ammonia facility 10 is released to the outside of the ammonia facility 10 from the release unit 15. In a case where the sensor 25 detects the outflow of the ammonia into the atmosphere, the air washer 20 is operated so that the ammonia contained in the air circulating through the ventilation opening 100 is absorbed by the water. Therefore, in a case where the ammonia flows out from the ammonia facility 10 into the atmosphere, it is possible to reduce entry of the ammonia from the ventilation opening 100 into the internal space of the accommodation space or the like. In a case where the ammonia does not flow out into the atmosphere, the operation of the air washer 20 is stopped, so that it is possible to achieve energy saving.

In addition, in the above-described embodiment described above, the sensor 25 is provided in the vent post 19 in a configuration in which the ammonia inside the ammonia facility 10 is released to the outside of the ammonia facility 10 via the safety valve 18 in a case where the pressure of the ammonia inside the ammonia facility 10 is equal to or higher than the specified value. Therefore, the ammonia released from the safety valve 18 can be detected by the sensor 25 in a case where the ammonia flows out into the atmosphere through the vent post 19. Therefore, for example, the release of ammonia from the safety valve 18 can be detected earlier as compared with a case where the sensor 25 is provided in the vicinity of the ventilation opening 100. In addition, the ammonia concentration inside the vent post 19 is higher than that in the atmosphere outside the vent post 19. Therefore, the outflow of ammonia into the atmosphere can be more reliably detected by the sensor 25.

Further, in the above-described embodiment, the used water used by the air washer 20 is recovered by the tank 41. This prevents the water that has absorbed the ammonia from flowing down, for example, onto the upper deck, and from reaching the seawater around which the floating main structure 2 floats from the upper deck. Furthermore, in the above-described embodiment, the ammonia contained in the water recovered into the tank 41 is treated by the ammonia treatment unit 42. Accordingly, it is possible to reduce a space in the floating structure 1 for storing the water that has absorbed the ammonia.

In addition, in the above-described embodiment, the water recovered into the tank 41 can be supplied to the air washer 20 from the water supply unit 30 through the circulation line 35. Therefore, since the water recovered into the tank 41 can be reused, it is possible to reduce the tank 41 in size. Further, it is possible to reduce an amount of water newly taken in from the outside to be supplied to the air washer 20 from the water supply unit 30.

In the above-described embodiment, in a case where the concentration of ammonia measured by the sensor 25 is equal to or higher than the threshold value set in advance, the signal indicating that ammonia has been detected is output. However, the present disclosure is not limited thereto.

For example, in a case where the concentration of the ammonia contained in the air is equal to or higher than the threshold value set in advance, the sensor 25 may further measure the concentration of the ammonia contained in the air and output a detection result thereof to the control device 60.

In this case, the control device 60 may perform control of a rotation speed of the pump 32 or the like to control an amount of the water supplied to the air washer 20 by the water supply unit 30 based on the concentration of the ammonia measured by the sensor 25.

As described above, by controlling the amount of the water supplied to the air washer 20 based on the ammonia concentration in the atmosphere measured by the sensor 25, it is possible to appropriately control the supply amount of water, for example, it is possible to reduce the amount of water supplied to the air washer 20, in a case where the ammonia concentration in the atmosphere is low.

### <Modification Example of Embodiment>

Hereinabove, the embodiment of the present disclosure has been described in detail with reference to the drawings, but the specific configuration is not limited to the embodiment, and includes design changes and the like within a scope not departing from the gist of the present disclosure.

### (First Modification Example of Embodiment)

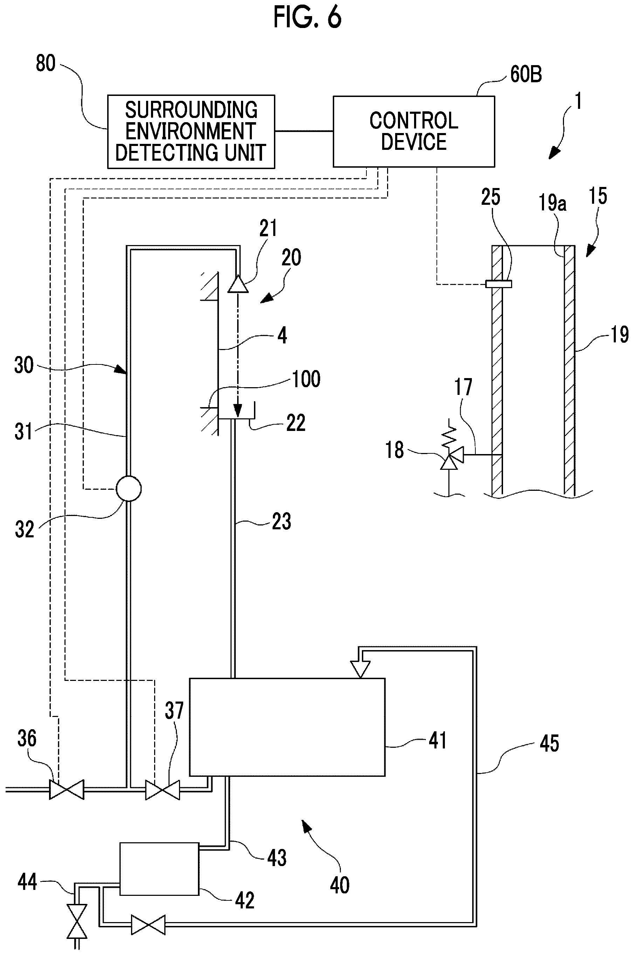

Fig. 6 is a schematic configuration diagram showing an air washer, a sensor, and a water treatment unit provided in a floating structure according to a first modification example of the embodiment of the present disclosure.

As shown in Fig. 6, the floating structure 1 further includes a surrounding environment detecting unit 80 that detects a surrounding environment of the floating main structure 2. The surrounding environment of the floating main structure 2 detected by the surrounding environment detecting unit 80 is information indicating environmental conditions around the floating main structure 2 that can affect a reaching state of the ammonia to the ventilation opening 100. The surrounding environment detecting unit 80 detects, for example, a wind direction, a temperature, and weather as information indicating the surrounding environment.

A control device 60B of the floating structure 1 according to the first modification example of the embodiment controls the amount of the water supplied to the air washer 20 by the water supply unit 30 based on the detection result of the sensor 25 and a detection result of the surrounding environment detecting unit 80.

In a case where an outflow of the ammonia from the ammonia facility 10 occurs, a reaching situation of the ammonia that has flowed out to the ventilation opening 100 may vary depending on the surrounding environment of the floating main structure 2, such as the wind direction, the air temperature, and the weather. Therefore, the surrounding environment detecting unit 80 detects the surrounding environment of the floating main structure 2, and the control device 60B controls the amount of the water supplied to the air washer 20 based on the detection result of the surrounding environment detecting unit 80 in addition to the detection result of the sensor 25. The air washer control unit 72 of the control device 60B may predict a diffusion state of the ammonia that has flowed out based on a program set in advance based on the detection result of the surrounding environment detecting unit 80.

Thereby, the air washer control unit 72 can increase or reduce the amount of the water supplied to the air washer 20 depending on the reaching situation of the water to the ventilation opening 100. The air washer control unit 72 controls the supply amount of the water. For example, the amount of the water supplied to the air washer 20 is reduced in a case where it is determined that it is a situation in which the ammonia that has flowed out is unlikely to reach the ventilation opening 100 because of the wind direction or the like, while the amount of the water supplied to the air washer 20 is increased in a case where it is determined that it is a situation in which the ammonia that has flowed out is likely to reach the ventilation opening 100.

### (Second Modification Example of Embodiment)

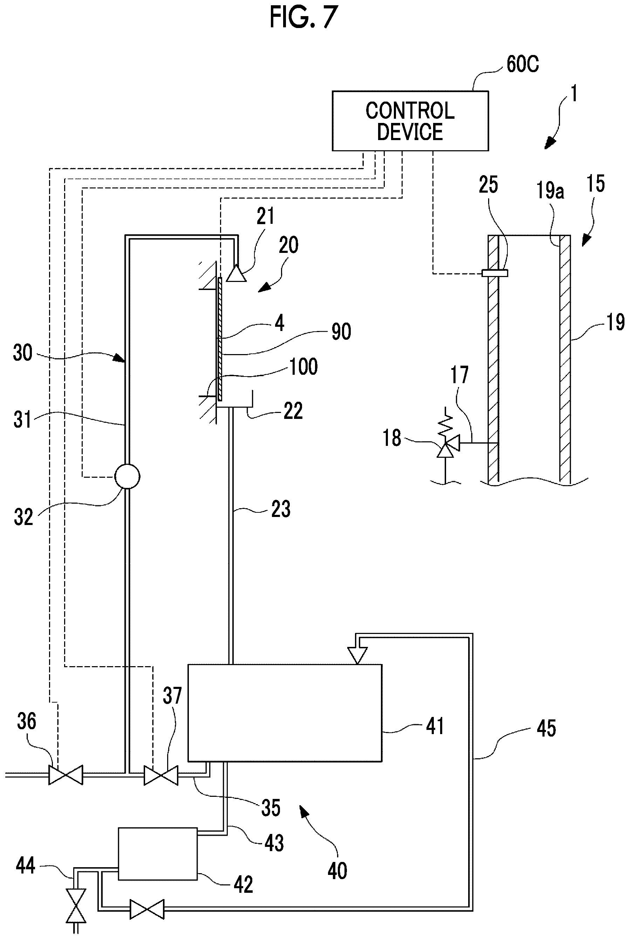

Fig. 7 is a schematic configuration diagram showing an air washer, a sensor, and a water treatment unit provided in a floating structure according to a second modification example of the embodiment of the present disclosure.

As shown in Fig. 7, the floating structure 1 further includes an opening/closing portion 90 that can close the ventilation opening 100. Examples of the opening/closing portion 90 include a damper, a shutter, or the like provided in the ventilation opening 100.

In this case, a control device 60C of the floating structure 1 closes the ventilation opening 100 via the opening/closing portion 90 in a case where the sensor 25 detects the outflow of the ammonia. Further, the control device 60C opens the ventilation opening 100 via the opening/closing portion 90 after operating the air washer 20 to start the supply of the water to the ventilation opening 100.

Accordingly, in a case where the sensor 25 detects the outflow of the ammonia, the entry of the ammonia from the ventilation opening 100 into the compartment in the floating structure 1 can be reduced quickly by closing the ventilation opening 100 via the opening/closing portion 90. In addition, after operating the air washer 20 to start the supply of the water to the ventilation opening 100, the ventilation opening 100 is opened via the opening/closing portion 90, so that the air washer 20 is operated to enable the circulation of air in/out of the ventilation opening 100 and to perform ventilation while reducing the entry of ammonia into the ventilation opening 100.

### (Other Embodiments)

Hereinabove, the embodiment of the present disclosure has been described in detail with reference to the drawings, but the specific configuration is not limited to the embodiment, and includes design changes and the like within a scope not departing from the gist of the present disclosure.

In the above-described embodiment, the ammonia tank 11 that stores the ammonia is provided as the ammonia facility 10, but the present disclosure is not limited thereto. The ammonia facility 10 may include, for example, equipment that uses ammonia as fuel. In this case, the release unit 15 releases the ammonia into the atmosphere from the ammonia facility 10 in a case where a pressure of ammonia in a fuel system of the ammonia, a pressure of ammonia inside a compartment accommodating the equipment using ammonia as a fuel, or the like is equal to or higher than a specified value. In addition, in a case where purge is performed with an inert gas which does not react with ammonia, the release unit 15 may release the ammonia remaining together with the inert gas.

In addition, in the above-described embodiment and each modification example of the embodiment, the case where the sensor 25 is disposed in the vent post 19, the ammonia released from the safety valve 18 is detected by the sensor 25, and the control device 60 controls the operation of the air washer 20 based on the detection result has been described. However, the present disclosure is not limited to the disposition of the sensor 25 as described above. For example, in order to detect the ammonia that has leaked (flowed out) from the ammonia facility 10 into the atmosphere without passing through the vent post 19, a sensor (not shown) that can detect ammonia around the ventilation opening 100 may be provided outside the vent post 19, and the control device 60 may control the operation of the air washer 20 based on a detection result of the sensor.

In addition, the control device 60 may control the operation of the air washer 20 based on the detection results of both the sensor that can detect ammonia around the ventilation opening 100 and the sensor 25 disposed in the vent post 19.

In this case, the ammonia concentration may be measured by the sensor that detects ammonia that has leaked (flowed out) into the atmosphere, and the air washer 20 may be operated in a case where the control device 60 determines that the ammonia concentration is equal to or higher than the threshold value set in advance.

Further, in the above-described embodiment and each modification example of the embodiment, the case where the sensor 25 can measure the ammonia concentration has been described, but the sensor is not limited to a sensor that can measure an ammonia concentration, and it is sufficient that the sensor can detect the outflow of the ammonia from the ammonia facility 10 into the atmosphere. For example, a sensor or the like that detects the opening of the safety valve 18 may be used.

In addition, in the above-described embodiment and each modification example of the embodiment, the air washer 20 is provided in the ventilation opening 100 exposed to the outer surface of the floating structure 1, but an installation position and an installation form of the air washer 20 are not limited thereto. The air washer 20 may be, for example, provided in the floating structure 1 and disposed in a semi-sealed compartment such as an air intake room that can communicate with the outside of the floating structure 1.

### <Additional Notes>

The floating structure 1 and the ammonia treatment method S10 for the floating structure 1 described in the embodiment are understood, for example, as follows.
(1) The floating structure 1 according to a first aspect includes the floating main structure 2, the ammonia facility 10 provided in the floating main structure 2, the ventilation opening 100 exposed to the outer surface of the floating main structure 2 and communicating with the compartment inside the floating main structure 2, the air washer 20 provided in the ventilation opening 100 and capable of supplying water to the ventilation opening 100 while enabling circulation of air in/out of the ventilation opening 100, the water supply unit 30 configured to supply the water to the air washer 20, the sensor 25 capable of detecting an outflow of ammonia from the ammonia facility 10 into the atmosphere, the control device 60, 60B, or 60C configured to operate the air washer 20 in a case where the sensor 25 detects the outflow of ammonia, and the water treatment unit 40 configured to recover used water used by the air washer 20.

Examples of the floating structure 1 include a ship such as a liquefied gas carrier, a ferry, a RORO ship, a vehicle carrier, or a passenger ship, and a floating storage unit (FSU), a floating storage and regasification unit (FSRU), and the like.

Examples of the outflow of ammonia into the atmosphere include the release from the safety valve 18 via the vent post 19 and the leakage from the ammonia facility 10.

The floating structure 1 performs ventilation of the compartment in the floating structure 1 through the ventilation opening 100. The air washer 20 that can supply water to the ventilation opening 100 is provided in the ventilation opening 100 while enabling the circulation of air in/out of the ventilation opening 100. In a case where the sensor 25 detects the outflow of the ammonia from the ammonia facility 10 into the atmosphere, the control devices 60, 60B, or 60C operates the air washer 20. In a case where the air washer 20 is operated, the water supplied by the water supply unit 30 is supplied to the ventilation opening 100. As a result, the ammonia contained in the air circulating through the ventilation opening 100 is absorbed by the water. The used water that has been used by the air washer 20 and has absorbed ammonia is recovered by the water treatment unit 40. Therefore, it is possible to reduce the entry of ammonia into the internal space through the ventilation opening 100.

(2) The floating structure 1 according to a second aspect is the floating structure 1 according to (1), and further includes the release unit 15 configured to release the ammonia from the ammonia facility 10 into the atmosphere in a case where the pressure of the ammonia inside the ammonia facility 10 is equal to or higher than the specified value, in which the sensor 25 detects that the ammonia is released from the release unit 15.

Accordingly, in a case where the pressure of the ammonia inside the ammonia facility 10 is equal to or higher than the specified value, the ammonia inside the ammonia facility 10 is released to the outside of the ammonia facility 10 from the release unit 15. In a case where the sensor 25 detects the outflow of ammonia into the atmosphere, the air washer 20 is operated so that the ammonia contained in the air circulating through the ventilation opening 100 is absorbed by the water.

(3) The floating structure 1 according to a third aspect is the floating structure 1 according to (2), in which the release unit 15 includes the safety valve 18 configured to release the ammonia inside the ammonia facility 10 to the outside of the ammonia facility 10 in a case where the pressure of the ammonia inside the ammonia facility 10 is equal to or higher than the specified value, and the vent post 19 configured to guide the ammonia released from the safety valve 18 to cause the ammonia to flow out into the atmosphere, and the sensor 25 is provided in the vent post 19.

Accordingly, in a case where the pressure of the ammonia inside the ammonia facility 10 is equal to or higher than the specified value, the safety valve 18 releases the ammonia inside the ammonia facility 10 to the outside of the ammonia facility 10. Then, the ammonia released from the safety valve 18 flows out into the atmosphere through the vent post 19.

In addition, since the sensor 25 is provided in the vent post 19, for example, the release of ammonia from the safety valve 18 can be detected earlier as compared with a case where the sensor 25 is provided in the vicinity of the ventilation opening 100. In addition, since the ammonia concentration in the vent post 19 is higher than that in the atmosphere, it is possible to more reliably detect the outflow of ammonia to the atmosphere by the sensor 25.

(4) The floating structure 1 according to a fourth aspect is the floating structure 1 according to any one of (1) to (3), in which the water treatment unit 40 includes the tank 41 configured to recover the used water used by the air washer 20, and the ammonia treatment unit 42 configured to treat ammonia included in the water recovered into the tank 41.

Accordingly, the used water used by the air washer 20 is recovered by the tank 41. This prevents the water that has absorbed the ammonia from flowing down, for example, onto the upper deck, and from reaching the seawater from the upper deck. Furthermore, the ammonia treatment unit 42 treats the ammonia contained in the water recovered to the tank 41. Accordingly, it is possible to reduce the space in the floating structure 1 for storing the water that has absorbed the ammonia.

(5) The floating structure 1 according to a fifth aspect is the floating structure 1 according to (4), and further includes the circulation line 35 capable of supplying the water recovered into the tank 41 to the water supply unit 30, in which the water supply unit 30 is capable of supplying the water recovered into the tank 41 to the air washer 20.

Accordingly, since the water recovered to the tank 41 can be supplied to the air washer 20 from the water supply unit 30 through the circulation line 35 to be reused, it is possible to reduce the tank 41 in size, and it is possible to reduce the amount of water newly taken in from the outside to be supplied to the air washer 20. In this case, for example, in a case where the water supplied to the air washer 20 contains the water recovered in the tank 41 and then treated in the ammonia treatment unit 42 provided in the floating structure 1 according to (4), the concentration of the ammonia contained in the water supplied to the air washer 20 can be reduced.

(6) The floating structure 1 according to a sixth aspect is the floating structure 1 according to any one of (1) to (5), and includes the surrounding environment detecting unit 80 configured to detect the surrounding environment of the floating main structure 2, in which the control device 60B controls the amount of the water supplied to the air washer 20 by the water supply unit 30 based on the detection result of the sensor 25 and the detection result of the surrounding environment detecting unit 80.

In a case where the outflow of the ammonia from the ammonia facility 10 in to the atmosphere occurs, a reaching situation of the ammonia that has flowed out to the ventilation opening 100 may vary depending on the surrounding environment of the floating main structure 2, such as the wind direction, the air temperature, and the weather. Therefore, the surrounding environment detecting unit 80 detects the surrounding environment of the floating main structure 2, and the control device 60B controls the amount of the water supplied to the air washer 20 based on the detection result of the surrounding environment detecting unit 80 in addition to the detection result of the sensor 25, so that it is possible to increase or reduce the amount of the water supplied to the air washer 20 according to the reaching situation of the ammonia that has flowed out to the ventilation opening 100. The supply amount of the water can be appropriately controlled. For example, the amount of the water supplied to the air washer 20 is reduced in a situation in which the ammonia that has flowed out is unlikely to reach the ventilation opening 100 because of the wind direction or the like.

Examples of the surrounding environment include information indicating a wind direction, a temperature, weather, and the like.

(7) The floating structure 1 according to a seventh aspect is the floating structure 1 according to any one of (1) to (6), in which the sensor 25 is capable of measuring an ammonia concentration of the atmosphere, and the control device 60, 60B, or 60C controls the amount of the water supplied to the air washer 20 by the water supply unit 30 based on the ammonia concentration measured by the sensor 25.

Accordingly, by controlling the amount of the water supplied to the air washer 20 based on the ammonia concentration in the atmosphere measured by the sensor 25, the supply amount of water can be appropriately controlled. For example, the amount of the water supplied to the air washer 20 is reduced in a case where the ammonia concentration in the atmosphere is low.

(8) The floating structure 1 according to an eighth aspect is the floating structure 1 according to any one of (1) to (7), and further includes the opening/closing portion 90 capable of closing the ventilation opening 100, in which the control device 60C closes the ventilation opening 100 via the opening/closing portion 90 in a case where the sensor 25 detects the outflow of the ammonia, and opens the ventilation opening 100 via the opening/closing portion 90 after operating the air washer 20 to start the supply of the water to the ventilation opening 100.

Accordingly, in a case where the sensor 25 detects the outflow of the ammonia, the entry of the ammonia from the ventilation opening 100 into the compartment in the floating structure 1 can be reduced quickly by closing the ventilation opening 100 via the opening/closing portion 90. In addition, after operating the air washer 20 to start the supply of the water to the ventilation opening 100, the ventilation opening 100 is opened via the opening/closing portion 90, so that the air washer 20 is operated to enable the circulation of air in/out of the ventilation opening 100 and to perform ventilation while reducing the entry of ammonia into the ventilation opening 100.

(9) The ammonia treatment method S10 for the floating structure 1 according to a ninth aspect is the ammonia treatment method S10 for the floating structure 1 according to any one of (1) to (8), and includes operating the air washer 20 to supply water to the ventilation opening 100 while enabling circulation of air in/out of the ventilation opening 100 in a case where an outflow of ammonia from the ammonia facility 10 provided in the floating main structure 2 is detected.

Accordingly, in a case where the sensor 25 detects the outflow of the ammonia from the ammonia facility 10 into the atmosphere, the ammonia contained in the air circulating through the ventilation opening 100 is absorbed by the water by the air washer 20. Therefore, it is possible to reduce the entry of ammonia into the internal space through the ventilation opening 100.

### Industrial Applicability

With the floating structure and the ammonia treatment method for the floating structure according to the present disclosure, it is possible to reduce the entry of ammonia into the internal space.

### Reference Signs List

1: floating structure
2: floating main structure
2a: bow
2b: stern
4: superstructure
5A, 5B: ship side
6: bottom
7: upper deck
8: exhaust pipe
9: funnel
10: ammonia facility
11: ammonia tank
15: release unit
17: connection pipe
18: safety valve
19: vent post
19a: opening
20: air washer
21: water supply nozzle
22: water recovery tray
23: water recovery pipe
25: sensor
30: water supply unit
31: supply line
32: pump
35: circulation line
36: first valve
37: second valve
40: water treatment unit
41: tank
42: ammonia treatment unit
43: connection pipe
44: discharge unit
45: treated water circulation line
60, 60B, 60C: control device
61: CPU
62: ROM
63: RAM
64: storage
65: signal transmission/reception module
71: signal reception unit
72: air washer control unit
73: command signal output unit
80: surrounding environment detecting unit
90: opening/closing portion
100: ventilation opening
FA: bow-stern direction
S10: ammonia treatment method for floating structure
S11: step of checking detection of ammonia
S12: step of operating air washer
S13: step of checking non-detection of ammonia
S14: step of stopping air washer

## Claims

1. A floating structure, comprising:
a floating main structure;
an ammonia facility provided in the floating main structure;
a ventilation opening exposed to an outer surface of the floating main structure and communicating with a compartment inside the floating main structure;
an air washer provided in the ventilation opening and capable of supplying water to the ventilation opening while enabling circulation of air in/out of the ventilation opening;
a water supply unit configured to supply the water to the air washer;
a sensor capable of detecting an outflow of ammonia from the ammonia facility into an atmosphere;
a control device configured to operate the air washer in a case where the sensor detects the outflow of ammonia; and
a water treatment unit configured to recover used water used by the air washer.

2. The floating structure according to Claim 1, further comprising:
a release unit configured to release the ammonia from the ammonia facility into the atmosphere in a case where a pressure of the ammonia inside the ammonia facility is equal to or higher than a specified value,
wherein the sensor detects that the ammonia is released from the release unit.

3. The floating structure according to Claim 2,
wherein the release unit includes
a safety valve configured to release the ammonia inside the ammonia facility to an outside of the ammonia facility in a case where the pressure of the ammonia inside the ammonia facility is equal to or higher than the specified value, and
a vent post configured to guide the ammonia released from the safety valve to cause the ammonia to flow out into the atmosphere, and
the sensor is provided in the vent post.

4. The floating structure according to Claim 1 or 2,
wherein the water treatment unit includes
a tank configured to recover the used water used by the air washer, and
an ammonia treatment unit configured to treat ammonia included in the water recovered into the tank.

5. The floating structure according to Claim 4, further comprising:
a circulation line capable of supplying the water recovered into the tank to the water supply unit,
wherein the water supply unit is capable of supplying the water recovered into the tank to the air washer.

6. The floating structure according to Claim 1 or 2, further comprising:
a surrounding environment detecting unit configured to detect a surrounding environment of the floating main structure,
wherein the control device controls an amount of the water supplied to the air washer by the water supply unit based on a detection result of the sensor and a detection result of the surrounding environment detecting unit.

7. The floating structure according to Claim 1 or 2,
wherein the sensor is capable of measuring an ammonia concentration of the atmosphere, and
the control device controls an amount of the water supplied to the air washer by the water supply unit based on the ammonia concentration measured by the sensor.

8. The floating structure according to Claim 1 or 2, further comprising:
an opening/closing portion capable of closing the ventilation opening,
wherein the control device closes the ventilation opening via the opening/closing portion in a case where the sensor detects the outflow of the ammonia, and opens the ventilation opening via the opening/closing portion after operating the air washer to start the supply of the water to the ventilation opening.

9. An ammonia treatment method for the floating structure according to the Claim 1 or 2, comprising:
operating the air washer to supply water to the ventilation opening while enabling circulation of air in/out of the ventilation opening in a case where an outflow of ammonia from the ammonia facility provided in the floating main structure is detected.
